# EUROPEAN PATENT SPECIFICATION

(11) **EP 2 738 322 B1**
(45) Date of publication and mention of the grant of the patent: **20.01.2016**
(21) Application number: 12194832.7
(22) Date of filing: 29.11.2012
(51) Int. Cl.: E02D 27/42, F03D 11/04, E04G 21/12, E04H 12/16, E04C 5/12

(54) **Tower structure**
Turmstruktur
Structure d'une tour

(43) Date of publication of application: 04.06.2014
(73) Proprietor: Siemens Aktiengesellschaft, 80333 München (DE)
(72) Inventor: Jensen, Martin Johan Smith, 7080 Børkop (DK); Skjaerbaek, Poul, 6920 Videbaek (DK); Stiesdal, Henrik, 5000 Odense C (DK)

(56) References cited:
- AU-B2- 568 376
- DE-A1-102011 001 250
- DE-A1-102011 010 417

## Description

The invention describes a tower structure, a tower structure foundation, a connector element, a wind turbine, and a method of constructing such a tower structure.

Wind turbine towers were traditionally made of steel segments stacked on top of one another to the required height. With the increasing costs of steel, concrete towers are becoming more widespread. A concrete wind turbine tower can be assembled by stacking pre-cast segments one on top of each other, or can be cast in situ. Tall towers require additional structural support in order to limit or attenuate tower oscillations. To this end, a set of reinforcing cables is usually connected between the tower base and the tower top, and/or between the tower base and an intermediate level. DE 10 2011 010 417 A1 describes an arrangement in which reinforcing cables are arranged outside the tower, extending from an intermediate level of the tower to anchoring points of a foundation, and in which the anchoring points are at a distance removed from the base of the tower. Reinforcing cables that are tightened or tensioned after installing are usually referred to as "post-tensioning cables" or simply "PT cables". A PT cable generally comprises a cluster of individual cables or "strands" enclosed in a mantle and terminated at one or both ends by a terminating element such as a bearing plate. The PT cable can be anchored at one end, i.e. in some way secured in the structure, and a post-tensioning jack can be mounted onto the other end and operated to apply a tension to the PT cable. By tensioning the cables in this way, a structure such as a concrete tower is pre-stressed and provided with the additional structural strength necessary to bear the loads acting on it, for example tower oscillations acting on a wind turbine tower during operation of the wind turbine.

For a very tall tower, an appropriate number of PT cables is required to obtain the desired structural stability.. The PT cables can be exposed in an interior cavity of the tower and can be fastened to the tower at some convenient points, for example one end of a cable can be anchored at an intermediate floor level, and the other end of the cable at the top level of the tower can be used for the post-tensioning step, or vice versa. Another set of cables can be arranged between the tower base and the same intermediate floor level or another intermediate floor level. Because of the large number of cables required for the necessary stability, and because these need to be evenly distributed about the tower, the cables and anchoring occupy much space in the interior of the tower.

In another approach, the cables are embedded in the tower walls, and usually extend from a foundation level to an uppermost tower level. The lower ends of the cables may terminate in anchor plates that are embedded in a concrete foundation, while the upper ends extend beyond an upper level of the tower. A post-tensioning step is carried out at the tower top level, before mounting a yaw ring or nacelle in place. However, a disadvantage of this approach is that the reinforcing cables must be incorporated in the foundation and tower from the very outset, which may make the tower construction complex and costly. This approach requires that cumbersome lift jacking equipment must be hoisted to the top of the tower. Furthermore, carrying out the post-tensioning step at such a height (wind turbine towers can reach a height of 100 m or more) is also associated with considerable safety hazards.

It is therefore an object of the invention to provide an improved tower construction that overcomes the problems indicated above.

This object is achieved by the tower structure of claim 1; by the tower structure foundation of claim 7; by the connector element of claim 10; by the wind turbine of claim 11; and by the method of claim 13 of constructing a tower structure.

According to the invention, the tower structure comprises a base portion with a number of recesses arranged in the base portion, wherein the position of a recess is arranged to corcorrespond to the position of an anchoring means anchored in a foundation of the tower structure; a number of reinforcing cables arranged in a wall of the tower structure such that a reinforcing cable lower portion extends into a recess; and a connector element for connecting a reinforcing cable lower portion to an anchoring means upper portion.

An advantage of the tower structure according to the invention is that it can be constructed in a relatively economical way, while at the same time the tower can achieve a very favourable structural stability through the reinforcing cables anchored to the foundation. The recesses in the tower base portion allow easy access to the end portions of the reinforcing cables and the anchoring means so that a post-tensioning step can be carried out quickly, easily and reliably. Furthermore, since the recesses also allow for a straightforward visual inspection of the reinforcing cable, anchoring means and connector, the status of the tower pre-stressing can easily be monitored. Another advantage of being able to access the end portions is that load or stress levels of the reinforcing cables can be carried out essentially at any time and with relatively little effort.

According to the invention, the tower structure foundation comprises a number of anchoring means arranged in the foundation, wherein the position of an anchoring means anchored in the foundation is arranged to correspond to the position of a reinforcing cable arranged in the wall of a tower structure according to the invention.

An advantage of the tower structure foundation according to the invention is that a secure and stable anchoring means is easily constructed for the tower structure that will be built on that foundation, for example a tower structure with reinforcing cables embedded or enclosed in the tower walls, or with reinforcing cables not embedded or only partially embedded in the tower walls.

According to the invention, the connector element is realised for connection between a lower portion of a reinforcing cable arranged in a tower structure and an upper portion of an anchoring means embedded in a foundation of the tower structure.

An advantage of the connector element according to the invention is that it can transfer any load or force, acting on the reinforcing cable, to the anchoring means and from thence into the foundation.

According to the invention, the wind turbine comprises such a tower structure for supporting a generator, preferably a tower structure according to the invention, which tower structure is mounted on such a foundation.

An advantage of the wind turbine according to the invention is that, with relatively little effort, a secure and reliable anchoring and pre-stressing of the reinforcing cables can be performed, so that the structural stability of the wind turbine can be increased, thereby reducing the likelihood of damage due to tower oscillations.

According to the invention, the method of constructing a tower structure comprises the steps of arranging a number of recesses in a base portion of the tower structure; arranging a number of anchoring means in a foundation of the tower structure; arranging the base portion on the foundation such that an anchoring means upper portion extends into a recess; arranging a number of reinforcing cables in a wall of the tower structure such that a reinforcing cable lower portion extends into a recess; and connecting the reinforcing cable lower portion to the anchoring means upper portion. The method steps can be carried out in any appropriate order, which may not necessarily correspond to the order listed here.

An advantage of the method according to the invention is that it allows a simpler and more economical construction of a tower while providing a secure and stable reinforcing and anchoring of the tower.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the tower structure is intended to support a wind turbine generator. Furthermore, again without restricting the invention in any way, it may be assumed that the tower is made of concrete or a similar material that benefits from being pre-stressed, and that the foundation is also made of concrete or other similar material. The term "cable" used in the context of a reinforcing cable can be understood to mean a single cable or a bundle of cables. Each cable can comprise any number of wire strands (mono-strand or multi-strand) of appropriate thicknesses and tensile strengths. Strands of a multi-strand cable can be arranged in a parallel manner and enclosed in a mantle, or can eb twisted and/or braided as appropriate. In the following, but without restricting the invention in any way, the term "reinforcing cable" can be understood to mean a post-tensioning cable of the kind widely used in the construction industry.

The "base portion" of the tower structure can be a distinct tower segment or simply the lower region of a tower cast in situ, or the lower region of a first tower segment arranged on a foundation or plinth. In the context of the invention, the "foundation" can be arranged wholly or partially underground, or can be formed as a plinth resting on or partially embedded in the ground.

The anchoring means can comprise any means suitable for connection to the lower end of a reinforcing cable. In a preferred embodiment of the invention, an anchoring means comprises at least one essentially vertical anchor rod embedded in the foundation. The upper end or portion of the anchor rod is left to extend by a suitable amount above the upper surface of the foundation, and these exposed parts are referred to here as the "anchoring means upper portion". To fulfil its function of contributing to the structural stability of the tower, an anchor rod or anchor bolt is preferably securely embedded in the foundation to counteract any upward traction force when later connected to the reinforcing cable. Therefore, in a further preferred embodiment of the invention, the anchor rods of the anchoring means are preferably connected to an anchor plate embedded in the foundation. An anchor plate can be a horizontal steel plate of an appropriate length and width, and the anchor bolts can be securely connected to the anchor plate. One or more additional anchor plates can be arranged about the anchor rods between the foundation upper level and the lowest anchor plate, to further secure the position of the anchoring means in the foundation.

Preferably, an anchoring means comprises one or more pairs of essentially vertical anchor rods or anchor bolts connected to the anchor plate, which are preferably spaced to accommodate a connector element for connecting the anchor rods to a reinforcing cable lower portion. Any traction force acting on the reinforcing cable can then be favourably spread over the pairs of anchor rods and further to the anchoring plate in the foundation.

The reinforcing cables can be arranged in the tower in any suitable manner. For example, for a tower cast in situ, the reinforcing cables may preferably be embedded directly in the tower as the concrete is poured. Alternatively, a cable duct may be embedded in the tower wall, and the reinforcing cables are preferably arranged in such cable ducts. Similarly, for a concrete tower made of pre-fabricated tower segments, these may be cast with through-holes or channels through which the reinforcing cables may be passed as the tower segments are stacked one on top of the other.

Since the reinforcing cables are preferably arranged within the tower walls, in a further preferred embodiment of the invention a recess is preferably dimensioned to accommodate at least a reinforcing cable lower portion, an anchoring means upper portion, and a connector element for connecting the reinforcing cable lower portion to the anchoring means upper portion. For example, for a tower that is 80 m or more in height, an arrangement of six to ten PT cables may be sufficient to ensure the necessary structural stability. Each PT cable might comprise a cluster of about 18 strands with a diameter of about 1.5 cm. The number of PT cables used to obtain the desired degree of post-tensioning may depend on factors such as tower thickness, wind turbine location, hub height, etc.

For a favourably even load transfer, and to withstand stress in the embedded portions, a load-bearing capacity of an anchoring element is preferably at least as large as the load-bearing capacity of the reinforcing cable to which it is connected. For example, if two anchor rods are used to secure one reinforcing cable, the combined load-bearing capacity of the anchor rods should be at least as large as the load-bearing capacity of the reinforcing cable. Other arrangements are also possible. For example, three anchor rods might be used to secure two reinforcing cables. In this case, the combined load-bearing capacity of the three anchor rods should be at least as large as the combined load-bearing capacity of the reinforcing cables.

To accommodate these elements comfortably, the height, width and depth of a recess are preferably chosen so that technicians can easily access any part of the reinforcing cable lower portion and the anchoring element upper portion, for example to put a connector element in place about them. Preferably, a recess is also dimensioned to accommodate a tool, for example a jacking tool, for applying a traction force to the reinforcing cable lower portion. Such a tool may be realised to "fit around" the reinforcing cable lower portion and an anchor rod upper portion. Of course, the dimensions of a recess are preferably as small as possible in order not to compromise the structural stability of the tower. For example, a suitable depth of a recess might be at most one half or one third of the thickness of the tower wall at that level.

A recess formed in the tower structure base portion essentially corresponds to a non-existing tower wall section. However, any loads acting on the tower will be transferred to the base of the tower, i.e. into the tower wall lower portion, and transferred to the foundation. Therefore, the tower wall base portion has an important load transfer functionality, and, depending on the thickness of the tower wall base portion, a lessening of the wall thickness may compromise its structural stability. Therefore, in a particularly preferred embodiment of the invention, the tower wall base portion comprises a thickened wall section about the recesses, so that a certain desired horizontal tower wall cross-section area is maintained even at the levels at which the recesses are incorporated. For example, the tower wall base portion can have a slightly "flared" shape so that the overall volume of the base portion in the region of the recesses is comparable to the volume of a base portion of a tower structure without any recesses. For example, for a tower structure with an essentially conical shape, the base portion can flare outwards to an extent that compensates for the material "removed" to form the recesses. Such a flared shape can be obtained in the manner described above by constructing a suitably shaped mould and pouring concrete into the mould.

The recesses in the base portion of the tower structure may be arranged to open onto the exterior of the tower. However, since the reinforcing cable lower portions, anchoring element upper portions and connector elements would then be exposed to weather extremes, such outwardly opening recesses may be equipped with covers to seal the recesses. Alternatively, in a preferred embodiment of the invention, the recesses are arranged to open onto an interior cavity of the tower structure base portion. This realisation has the advantage that the relevant parts are protected from weather, and recess covers are not necessary.

A wind turbine tower for the newer types of direct-drive wind turbines can easily reach a height of 100 m or more, with a diameter of about 6 m - 10 m at its base. For the structural stability of such a tall tower, PT cables should be arranged at regular intervals in the tower walls. Therefore, in a preferred embodiment of the invention, the tower structure comprises at least six recesses for accommodating at least six reinforcing cable arrangements, whereby a reinforcing cable arrangement can comprise one or more PT cables extending into a recess.

A connector element according to the invention is preferably secured or fixed between the reinforcing cable lower portion and the anchoring means upper portion to connect these together. Preferably, the connector element is arranged to accommodate the upper ends of two anchor rods and the lower end of a reinforcing cable. For a favourably symmetrical load distribution, the connecter element is preferably realised so that the lower end of a reinforcing cable is held in the centre of the connector element, while the upper ends of the anchor rods are held on either side of the reinforcing cable lower end. The connector element can be made in any suitable manner, for example with a suitable number of through-openings for the reinforcing cable lower end and anchor rod upper end(s). It can be formed to clamp about a bearing plate of a PT cable and the anchor rod upper end(s).

To pre-stress the concrete tower, the reinforcing cables must be post-tensioned. To this end, a traction force must be applied to the reinforcing cable to lengthen it slightly, and the reinforcing cable must be secured in that state to the anchoring element. Therefore, in a particularly preferred embodiment of the invention, the method comprises the steps of detachably mounting a traction tool to the reinforcing cable lower portion and applying a traction force to the reinforcing cable. A hydraulic jack may be used for that purpose. The anchoring elements secured in the foundation can be arranged to suit the known types of traction tool, so that such a traction tool can be conveniently fastened to the anchor rods, using these to obtain the necessary counter-force when applying the traction force to the reinforcing cable. Once the desired degree of tension has been developed in the reinforcing cable, a connector element can be secured to the reinforcing cable lower portion and the anchoring element upper portion so that the tension is maintained once the post-tensioning tool is removed.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a schematic partial cut-away through a first embodiment of a tower structure and foundation according to the invention;
Fig. 2 shows a schematic rendering of a first stage of the construction method;
Fig. 3 shows a schematic rendering of a second stage of the construction method;
Fig. 4 shows a schematic rendering of a third stage of the construction method;
Fig. 5 shows a schematic rendering of a fourth stage of the construction method;
Fig. 6 shows a schematic rendering of an embodiment of a connector according to the invention;
Fig. 7 shows a partial cross-section through a second embodiment of the tower structure according to the invention;
Fig. 8 shows a partial cross-section through a prior art tower structure and foundation.

In the diagrams, like numbers refer to like objects throughout. Objects in the diagrams are not necessarily drawn to scale.

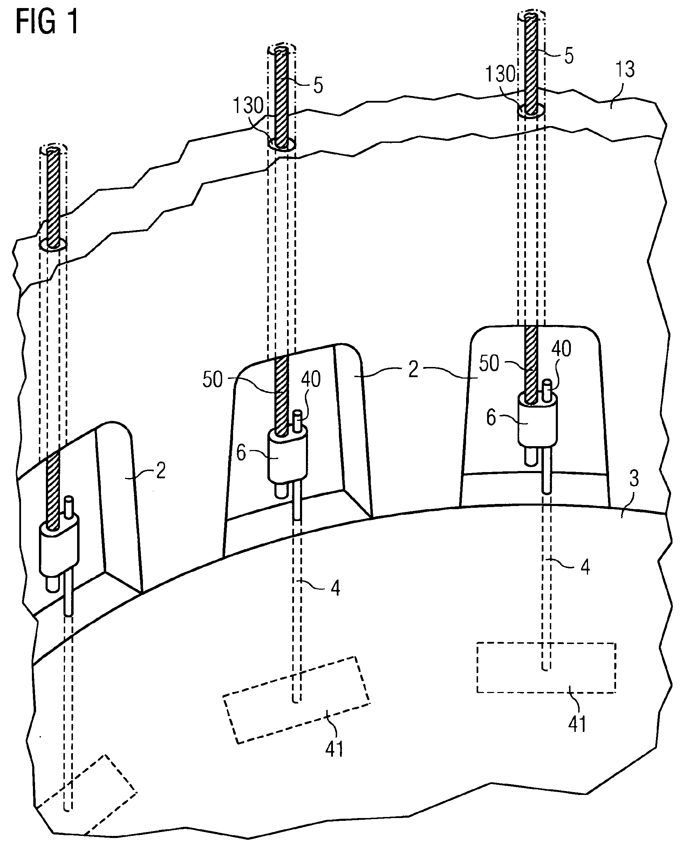

Fig. 1 shows a schematic cut-away through a tower structure 1 and foundation 3 according to an embodiment of the invention. The diagram shows a number of recesses 2 in a base portion 10 of the tower 1. Each recess 2 is arranged over an anchoring element 4, 41 that is embedded in the foundation 3. The anchoring element 4, 41 in this embodiment comprises an anchor rod 4 firmly connected to a flat anchor plate 41 arranged horizontally at a lower level in the foundation 3. The spacings between anchor rods 4 correspond to the spacings between reinforcing cables in the tower base portion 10, so that the anchor rods 4 and the reinforcing cables 5 are essentially co-linear in this embodiment.

A reinforcing cable 5 passes through a cable duct 130 formed in the tower wall 13, and extends from above into the recess 2 so that a lower end portion 50 of the reinforcing cable 5 is exposed in the recess 2. An anchor rod 4 extends from below into the recess 2 so that an upper end 40 of the anchor rod 4 is exposed in the recess 2. The reinforcing cable lower end 50 and the anchor rod upper end 40 may overlap to some extent, depending on how they should be connected or joined together. In this embodiment, a connector 6 is secured about the reinforcing cable lower end 50 and the anchor rod upper end 40, so that any load acting on the reinforcing cable 5 is transferred through the anchor rod 4 to the anchor plate 41 and foundation 3. Before fastening the connector 6 about the reinforcing cable lower end 50 and the anchor rod upper end 40, the reinforcing cable 5 can be post-tensioned as explained above.

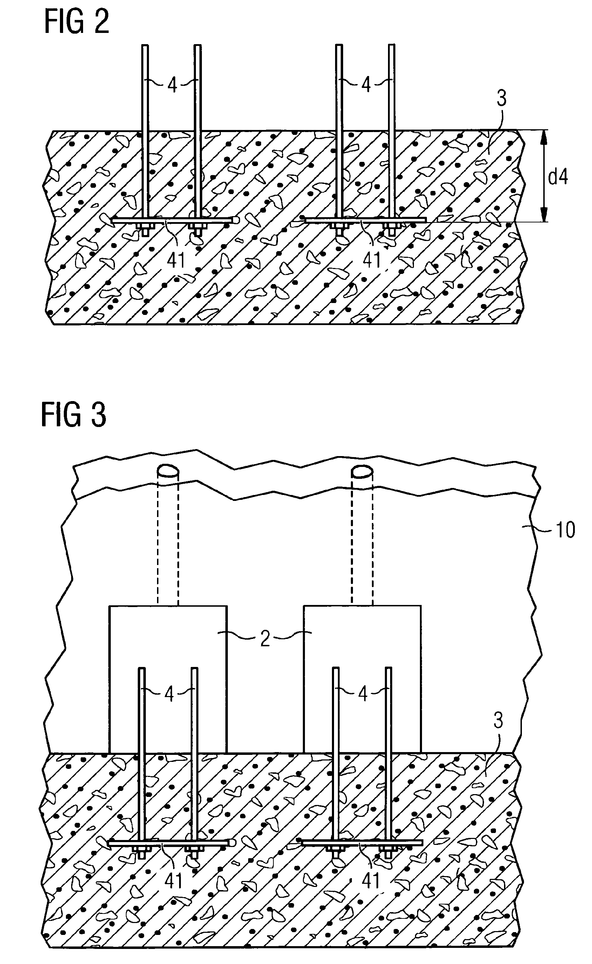

Fig. 2 shows a schematic rendering of a first stage of the construction method of the invention. Here, a concrete foundation 3 has been cast with a set of anchor rods 4 connected in pairs to flat horizontal anchor plates 41 embedded to a suitable depth d₄ in the foundation. In this embodiment, the anchor bolts 4 emerge pair-wise from the foundation 3 and protrude to an appropriate height above the foundation surface. Although the diagram cannot show this, the pairs of anchor bolts 4 are arranged in a circular arrangement with a diameter corresponding essentially to a diameter of a tower that is to be constructed on that foundation 3.

Fig. 3 shows a schematic rendering of a second stage of the construction method of the invention. Here, a tower structure base portion 10 has been arranged on the foundation 3. Recesses 2 formed in the base portion 10 coincide with the anchor bolt pairs 4 emerging from the foundation 3.

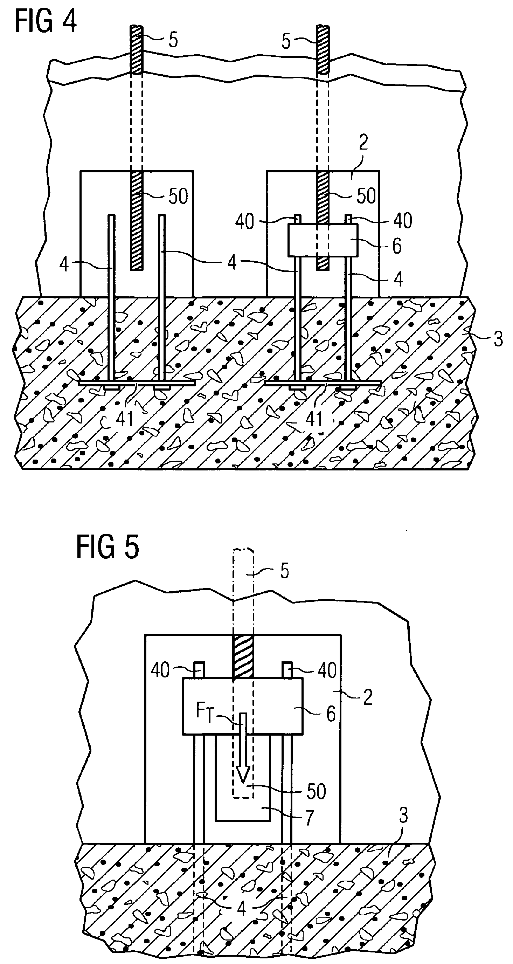

Fig. 4 shows a schematic rendering of a third stage of the construction method of the invention. Here, reinforcing cables 5 have been installed in the tower wall 13, such that a lower end 50 of each reinforcing cable 5 is positioned between each pair of anchor bolts 4. A connector 6 is put into place about the upper ends 40 of the anchor bolts 4 and the reinforcing cable lower end 50, and secured to the anchor bolts 4, as shown on the right-hand side of the diagram. The connector 6 is clamped to the anchor bolts 4.

Fig. 5 shows a schematic rendering of a fourth stage of the construction method of the invention. Here, a hydraulic post-tensioning tool 7 is mounted on the reinforcing cable lower end 50 and, powered by an actuating means not shown here, applies a traction force F_{T} to the reinforcing cable 5. The anchor rods 4 and connector 6 provide the necessary counter-force to the post-tensioning tool 7. Finally, the connector 6 is secured to the reinforcing cable lower end 50 also, in order to "fix" the new extended length of the reinforcing cable 5 relative to the anchor rods 4. The post-tensioning tool 7 is removed.

The relevant dimensions - number of reinforcing cables 5, number of anchor rods 4 per cable 5, diameters of reinforcing cables 5 and anchor rods 4, depth d₄ of anchor plate 41 etc. - may have been computed in a prior modelling step or may have been derived from measurements made on existing structures.

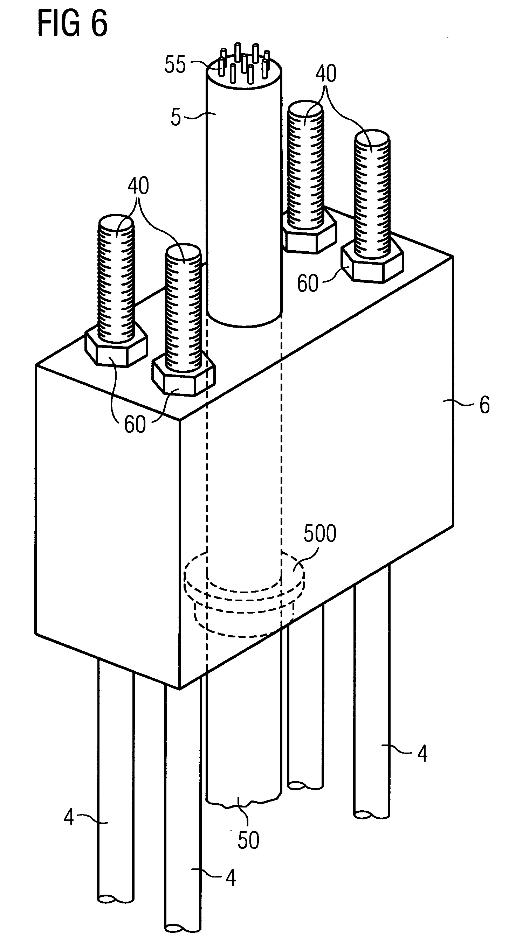

Fig. 6 shows an embodiment of a connector element 6 according to the invention. Here, the connector element 6 is realised to fit about the upper ends 40 of two pairs of threaded anchor bolts 4, and one reinforcing cable lower portion 50. To this end, the connector 6 is provided with two pairs of through openings at its outer ends for two pairs of anchor bolts, and one central through-opening for a reinforcing cable 5, in an essentially symmetrical arrangement. The diagram shows a multi-strand PT cable 5 comprising several strands 55 embedded in a mantle. To mount the connector 6, it can be put into place over the bearing plate 500 of a PT cable 5 and threaded onto the upper ends 40 of the anchor bolts 4 before the tower is constructed. When the tower construction is complete, a hydraulic post-tensioning jack can be operated to post-tension the reinforcing cable 5. Once the PT cable 5 has been tensioned, hex nuts 60 can be secured onto the anchor bolts 4.

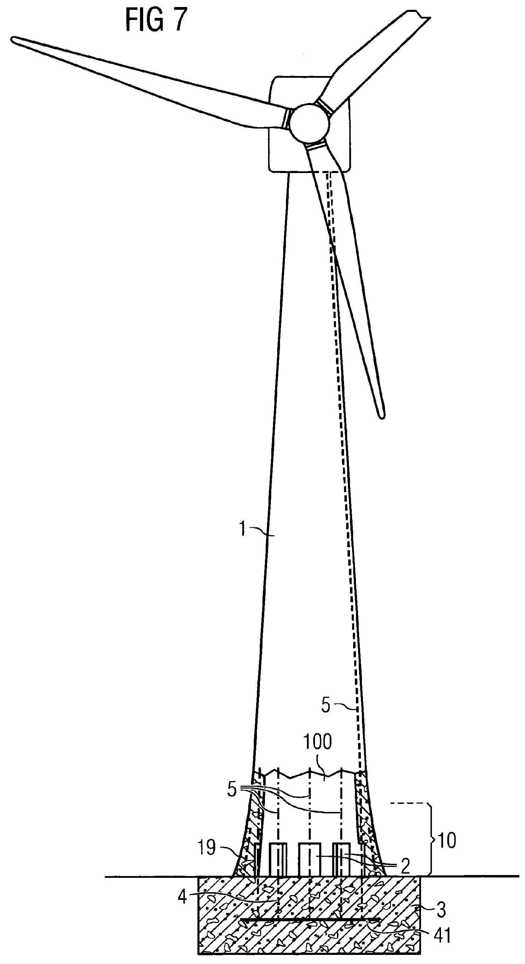

Fig. 7 shows a cross-section through a tower structure 1 for an embodiment of a wind turbine 8 according to the invention. Reinforcing cables 5 extend from the top of the tower 1 to the recesses 2 arranged to open into the tower interior 100 in the base portion of the tower 1. Here, the base portion of the tower structure 1 has a greater wall thickness in the neighbourhood of the recesses 2. The added material compensates for the material "removed" by the recesses 2. The added material can be distributed evenly about the base portion 10 of the tower, as indicated here by an outwardly flared shape. The outline of a comparable base portion of a prior art tower, without any recesses, is indicated by the broken line 19.

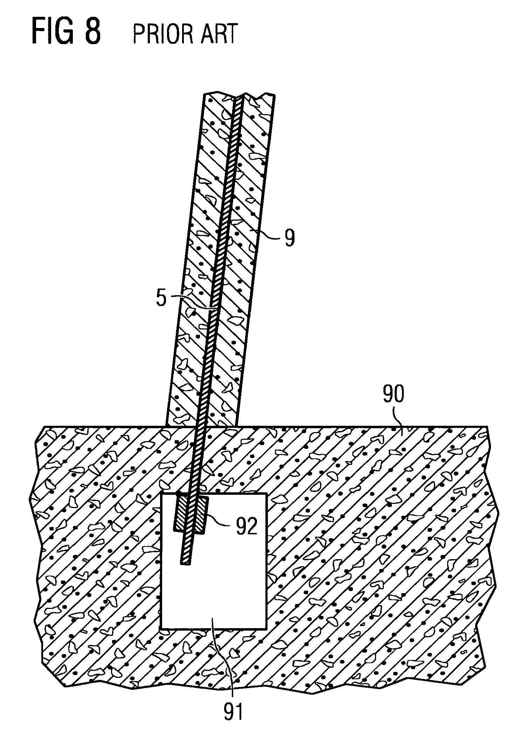

Fig. 8 shows part of a prior art tower structure 9, in which the reinforcing cables 5 extend all the way to the bottom of the tower structure. To perform a post-tensioning step, access cavities 91 must be provided in a foundation 90. A post-tensioning tool can be mounted over an end portion of a reinforcing cable 5 protruding into an access cavity 91. After post-tensioning, a cable terminator 92 is secured over the stretched cable 5.

## Claims

1. A tower structure (1) comprising
- a base portion (10) with a number of recesses (2) arranged in the base portion (10), wherein a recess (2) is arranged to correspond to an anchoring means (4, 41) anchored in a foundation (3) for the tower structure (1);
- a number of reinforcing cables (5) arranged in a wall (13) of the tower structure (1) such that a reinforcing cable lower portion (50) extends into said recess (2); and
- a connector element (6) for connecting said reinforcing cable lower portion (50) to an anchoring means upper portion (40).

2. A tower structure according to claim 1, wherein said recess (2) is dimensioned to accommodate at least a reinforcing cable lower portion (50), an anchoring means upper portion (40), and a connector element (6) for connecting the reinforcing cable lower portion (50) to the anchoring means upper portion (40).

3. A tower structure according to claim 2, wherein the recess (2) is dimensioned to accommodate a device (7) for applying a traction force (F_{T}) to the reinforcing cable (5).

4. A tower structure according to any of the preceding claims, wherein a recess (2) is arranged to open onto an interior cavity (100) of the tower structure base portion (10).

5. A tower structure according to any of the preceding claims, wherein a reinforcing cable (5) is cast in the tower wall (13).

6. A tower structure according to any of the preceding claims, wherein a reinforcing cable (5) is arranged in a cable duct (130), which cable duct (130) is embedded in the tower wall (13).

7. A tower structure foundation (3), comprising a number of anchoring means (4, 41) arranged in the foundation (3), wherein the position of an anchoring means (4, 41) anchored in the foundation (3) is arranged to correspond to the position of a reinforcing cable (5) arranged in the wall (13) of a tower structure (1) according to any of claims 1 to 6.

8. A foundation according to claim 7, wherein an anchoring means (4, 41) comprises at least one essentially vertical anchor rod (4) connected to an anchor plate (41), which anchor plate (41) is embedded in the foundation (3).

9. A foundation according to claim 8, wherein an anchoring means (4, 41) comprises a pair of essentially vertical anchor rods (4) connected to the anchor plate (41), and wherein the anchor rods (4) are spaced to accommodate a connector element (6) for connecting anchor rod upper portions (40) to a reinforcing cable lower portion (50).

10. A connector element (6) connecting between a lower portion (50) of a reinforcing cable (5) arranged in a tower structure (1) according to any of claims 1 to 7 and an upper portion (40) of an anchoring means (4) embedded in a tower structure foundation (3) according to any of claims 7 to 9.

11. A wind turbine (8) comprising a tower structure for supporting a generator, a tower structure (1) according to any of claims 1 to 6, which tower structure is mounted on a foundation (3) according to any of claims 7 to 9.

12. A wind turbine according to claim 11, wherein the tower structure (1) extends to a height of at least 80 m and comprises at least six recesses (2) for accommodating at least six reinforcing cable arrangements.

13. A method of constructing a tower structure (1) according to any of claims 1-6 which method comprises
- arranging a number of recesses (2) in a base portion (10) of the tower structure (1);
- arranging a number of anchoring means (4, 41) in a foundation (3) for the tower structure (1);
- arranging the base portion (10) on the foundation (3) such that an anchoring means upper portion (40) extends into a recess (2);
- arranging a number of reinforcing cables (5) in a wall (13) of the tower structure (1) such that a reinforcing cable lower portion (50) extends into a recess (2); and
- connecting the reinforcing cable lower portion (50) to the anchoring means upper portion (40).

14. A method according to claim 13, wherein the step of connecting the reinforcing cable lower portion (50) to the anchoring means upper portion (40) comprises fixing a connector element (6) between the reinforcing cable lower portion (50) and the anchoring means upper portion (40).

15. A method according to claim 13 or claim 14, comprising the steps of detachably mounting a traction tool (7) to the reinforcing cable lower portion (50) and applying a traction force (F_{T}) to the reinforcing cable (5).

## Patentansprüche

1. Turmkonstruktion (1), die Folgendes umfasst:
- einen Basisabschnitt (10) mit mehreren darin angeordneten Aussparungen (2), wobei eine Aussparung (2) so angeordnet ist, dass sie mit einem Verankerungsmittel (4, 41) übereinstimmt, das in einem Fundament (3) für die Turmkonstruktion (1) verankert ist,
- mehrere Bewehrungsseile (5), die so in einer Wand (13) der Turmkonstruktion (1) angeordnet sind, dass ein unterer Bewehrungsseilabschnitt (50) in die Aussparung (2) hinein verläuft, und
- ein Verbindungselement (6) zum Verbinden des unteren Bewehrungsseilabschnitts (50) mit einem oberen Verankerungsmittelabschnitt (40).

2. Turmkonstruktion nach Anspruch 1, bei der die Aussparung (2) so bemessen ist, dass sie zumindest einen unteren Bewehrungsseilabschnitt (50), einen oberen Verankerungsmittelabschnitt (40) und ein Verbindungselement (6) zum Verbinden des unteren Bewehrungsseilabschnitts (50) mit dem oberen Verankerungsmittelabschnitt (40) aufnimmt.

3. Turmkonstruktion nach Anspruch 2, bei der die Aussparung (2) so bemessen ist, dass sie eine Vorrichtung (7) zum Ausüben einer Zugkraft (F_{T}) auf das Bewehrungsseil (5) aufnimmt.

4. Turmkonstruktion nach einem der vorhergehenden Ansprüche, bei der eine Aussparung (2) so angeordnet ist, dass sie sich in einen Innenhohlraum (100) des Turmkonstruktionsbasisabschnitts (10) öffnet.

5. Turmkonstruktion nach einem der vorhergehenden Ansprüche, bei der ein Bewehrungsseil (5) in die Turmwand (13) eingegossen ist.

6. Turmkonstruktion nach einem der vorhergehenden Ansprüche, bei der ein Bewehrungsseil (5) in einem Spannkanal (130) angeordnet ist, der in die Turmwand (13) eingebettet ist.

7. Turmkonstruktionsfundament (3), das mehrere darin angeordnete Verankerungsmittel (4, 41) umfasst, wobei die Position eines im Fundament (3) verankerten Verankerungsmittels (4, 41) so angeordnet ist, dass sie der Position eines Bewehrungsseils (5) entspricht, das in der Wand (13) einer Turmkonstruktion (1) nach einem der Ansprüche 1 bis 6 angeordnet ist.

8. Fundament nach Anspruch 7, bei dem ein Verankerungsmittel (4, 41) mindestens einen im Wesentlichen vertikalen Ankerstab (4) umfasst, der mit einer Ankerplatte (41) verbunden ist, die in das Fundament (3) eingebettet ist.

9. Fundament nach Anspruch 8, bei dem ein Verankerungsmittel (4, 41) ein Paar im Wesentlichen vertikaler Ankerstäbe (4) umfasst, die mit der Ankerplatte (41) verbunden sind, und die Ankerstäbe (4) so beabstandet sind, dass Platz für ein Verbindungselement (6) zum Verbinden von oberen Ankerstababschnitten (40) mit einem unteren Bewehrungsseilabschnitt (50) vorhanden ist.

10. Verbindungselement (6), welches den unteren Abschnitt (50) eines Bewehrungsseils (5), das in einer Turmkonstruktion (1) nach einem der Ansprüche 1 bis 7 angeordnet ist, mit einem oberen Abschnitt (40) eines Verankerungsmittels (4) verbindet, das in ein Turmkonstruktionsfundament (3) nach einem der Ansprüche 7 bis 9 eingebettet ist.

11. Windturbine (8) mit einer Turmkonstruktion zum Tragen eines Generators, einer Turmkonstruktion (1) nach einem der Ansprüche 1 bis 6, die auf ein Fundament (3) nach einem der Ansprüche 7 bis 9 montiert ist.

12. Windturbine nach Anspruch 11, bei der die Turmkonstruktion (1) bis in eine Höhe von mindestens 80 m verläuft und mindestens sechs Aussparungen (2) zum Aufnehmen von mindestens sechs Bewehrungsseilanordnungen umfasst.

13. Verfahren zum Errichten einer Turmkonstruktion (1) nach einem der Ansprüche 1 bis 6, das Folgendes umfasst:
- Anordnen mehrerer Aussparungen (2) in einem Basisabschnitt (10) der Turmkonstruktion (1),
- Anordnen mehrerer Verankerungsmittel (4, 41) in einem Fundament (3) für die Turmkonstruktion (1),
- derartiges Anordnen des Basisabschnitts (10) auf dem Fundament (3), dass ein oberer Verankerungsmittelabschnitt (40) in eine Aussparung (2) hinein verläuft,
- derartiges Anordnen mehrerer Bewehrungsseile (5) in einer Wand (13) der Turmkonstruktion (1), dass ein unterer Bewehrungsseilabschnitt (50) in eine Aussparung (2) hinein verläuft, und
- Verbinden des unteren Bewehrungsseilabschnitts (50) mit dem oberen Verankerungsmittelabschnitt (40).

14. Verfahren nach Anspruch 13, bei dem das Verbinden des unteren Bewehrungsseilabschnitts (50) mit dem oberen Verankerungsmittelabschnitt (40) das Befestigen eines Verbindungselements (6) zwischen dem unteren Bewehrungsseilabschnitt (50) und dem oberen Verankerungsmittelabschnitt (40) umfasst.

15. Verfahren nach Anspruch 13 oder 14, das das abnehmbare Montieren eines Zughilfsmittels (7) an dem unteren Bewehrungsseilabschnitt (50) und das Ausüben einer Zugkraft (F_{T}) auf das Bewehrungsseil (5) umfasst.

## Revendications

1. Structure d'une tour (1) comprenant :
- une partie de base (10) ayant un certain nombre d'évidements (2) disposés dans la partie de base (10), dans lequel un évidement (2) est disposé pour correspondre à des moyens d'ancrage (4, 41) ancrés dans une fondation (3) pour la structure d'une tour (1) ;
- un certain nombre de câbles de renfort (5) disposés dans une paroi (13) de la structure d'une tour (1) de sorte qu'une partie inférieure de câble de renfort (50) s'étend dans ledit évidement (2), et
- un élément de connecteur (6) pour connecter ladite partie inférieure de câble de renfort (50) à une partie supérieure de moyens d'ancrage (40).

2. Structure d'une tour selon la revendication 1, dans laquelle ledit évidement (2) est dimensionné pour recevoir au moins une partie inférieure de câble de renfort (50), une partie supérieure de moyens d'ancrage (40), et un élément de connecteur (6) pour connecter la partie inférieure de câble de renfort (50) à la partie supérieure de moyens d'ancrage (40).

3. Structure d'une tour selon la revendication 2, dans laquelle l'évidement (2) est dimensionné pour recevoir un dispositif (7) pour appliquer une force de traction (F_{T}) aux câbles de renfort (5).

4. Structure d'une tour selon l'une quelconque des revendications précédentes, dans laquelle un évidement (2) est conçu pour s'ouvrir sur une cavité intérieure (100) de la partie de base de la structure d'une tour (10).

5. Structure d'une tour selon l'une quelconque des revendications précédentes, dans laquelle un câble de renfort (5) est moulé dans la paroi d'une tour (13).

6. Structure d'une tour selon l'une quelconque des revendications précédentes, dans laquelle un câble de renfort (5) est disposé dans une gaine de câble (130), laquelle gaine de câble (130) est incorporée dans la paroi d'une tour (13).

7. Fondation d'une structure d'une tour (3) comprenant un nombre de moyens d'ancrage (4, 41) disposés dans la fondation (3), dans laquelle la position des moyens d'ancrage (4, 41) ancrés dans la fondation (3) est prévue pour correspondre à la position d'un câble de renfort (5) disposé dans la paroi (13) d'une structure d'une tour (1) selon l'une quelconque des revendications 1 à 6.

8. Fondation selon la revendication 7, dans laquelle des moyens d'ancrage (4, 41) comportent au moins une tige d'ancrage en grande partie verticale (4) reliée à une plaque d'ancrage (41), laquelle plaque d'ancrage (41) est incorporée dans la fondation (3).

9. Fondation selon la revendication 8, dans laquelle des moyens d'ancrage (4, 41) comportent une paire de tiges d'ancrage en grande partie verticale (4) reliées à la plaque d'ancrage (41), et dans laquelle les tiges d'ancrage (4) sont espacées pour recevoir un élément de connecteur (6) pour connecter des parties supérieures de tige d'ancrage (40) à une partie inférieure de câble de renfort (50).

10. Élément de connecteur (6) effectuant une liaison entre une partie inférieure (50) d'un câble de renfort (5) disposée dans une structure d'une tour (1) selon l'une quelconque des revendications 1 à 7 et une partie supérieure (40) de moyens d'ancrage (40) incorporée dans une fondation d'une structure d'une tour (3) selon l'une quelconque des revendications 7 à 9.

11. Éolienne (8) comprenant une structure d'une tour pour supporter un générateur, une structure d'une tour (1) selon l'une quelconque des revendications 1 à 6, laquelle structure d'une tour est montée sur une fondation (3) selon l'une quelconque des revendications 7 à 9.

12. Éolienne selon la revendication 11, dans laquelle la structure d'une tour (1) s'étend jusqu'à une hauteur d'au moins 80 m et comporte au moins six évidements (2) pour recevoir au moins six dispositions de câbles de renfort.

13. Procédé de construction d'une structure d'une tour (1) selon l'une quelconque des revendications 1 à 6, lequel procédé comprend :
- disposer un nombre d'évidements (2) dans une partie de base (10) de la structure d'une tour (1) ;
- disposer un nombre de moyens d'ancrage (4, 41) dans une fondation (3) pour la structure d'une tour (1) ;
- disposer la partie de base (10) sur la fondation (3) de sorte qu'une partie supérieure des moyens d'ancrage (40) s'étend dans un évidement (2) ;
- disposer un nombre de câbles de renfort (5) dans une paroi (13) de la structure d'une tour (1) de sorte qu'une partie inférieure de câble de renfort (50) s'étend dans un évidement (2) ; et
- connecter la partie inférieure de câble de renfort (50) à la partie supérieure de moyens d'ancrage (40).

14. Procédé selon la revendication 13, dans lequel l'étape de liaison de la partie inférieure de câble de renfort (50) à la partie supérieure de moyens d'ancrage (40) comprend fixer un élément de connecteur (6) entre la partie inférieure de câble de renfort (50) et la partie supérieure de moyens d'ancrage (40).

15. Procédé selon la revendication 13 ou la revendication 14, comprenant les étapes consistant à monter de manière amovible un outil de traction (7) sur la partie inférieure de câble de renfort (50) est à appliquer une force de traction (F_{T}) au câble de renfort (5).
